# EUROPEAN PATENT APPLICATION

(11) **EP 4 661 364 A1**
(43) Date of publication of application: **10.12.2025**
(21) Application number: 25181383.8
(22) Date of filing: 06.06.2025
(51) Int. Cl.: H04L 45/00, H04L 45/74, H04W 28/02, H04W 52/02

(54) **MULTI-PROCESSOR CONNECTIVITY**

(30) Priority: 07.06.2024 US 202463657437 P; 07.06.2024 US 202463657540 P; 03.06.2025 US 202519227020; 03.06.2025 US 202519226342
(71) Applicant: Apple Inc., Cupertino, CA 95014 (US)
(72) Inventor: SANGHI, KARAN, Cupertino, CA, 95014 (US); MASPUTRA, Cahya A., Cupertino, CA, 95014 (US); NAIR, Sandeep, Cupertino, CA, 95014 (US); KLACAR, Neven, Cupertino, CA, 95014 (US); YUEN, Ricky W., Cupertino, CA, 95014 (US); MUDIREDDY, Srinivas Reddy, Cupertino, CA, 95014 (US); VAN MILLIGAN, Michael R., Cupertino, CA, 95014 (US); BARVE, Milind A., Cupertino, CA, 95014 (US); YEPEZ, Roberto G., Cupertino, CA, 95014 (US); CHANDIKA, Nagarani, Cupertino, CA, 95014 (US)
(74) Representative: Lang, Johannes

(57) **Abstract**

Techniques are disclosed relating to communicating network traffic using multiple network stacks. **In** various embodiments, a device including first and second processors and a network interface receives network traffic from an external computing system. The network interface determines, based on a set of routing criteria, whether to route the network traffic to a destination one of a first network stack executing on the first processor or a second network stack executing on the second processor, where the second network stack supports a subset of functions supported by the first network stack. The device then processes the routed network traffic at the destination network stack. **In** some embodiments, the second processor is an efficiency processor having a reduced power consumption relative to the first processor. **In** some embodiments, the first processor enters a reduced power state while the second processor processes routed network traffic via the second network stack.

## Description

The present application claims priority to U.S. Prov. Appl. No. 63/657,437, entitled "MultiProcessor Connectivity," filed June 7, 2024, and to U.S. Prov. Appl. No. 63/657,540, entitled "Session Keep-Alive," filed June 7, 2024; the disclosures of each of the above-referenced applications are incorporated by reference herein in their entireties.

### BACKGROUND

### Technical Field

This disclosure relates generally to computing devices, and, more specifically, to routing network traffic via a network interface.

### Description of the Related Art

Power consumption can be a significant concern for mobile devices, such as smartphones, wearables, etc., due to their reliance on a finite battery supply. With the increasing use of advanced features and applications that demand higher processing power and larger displays, the battery life of these devices has become a major challenge. The constant use of Wi-Fi^{®}, Bluetooth^{®}, GPS, and other power-hungry features can quickly drain the battery, leaving users stranded without communication or entertainment options. Moreover, extended usage of power-intensive applications like gaming, video streaming, and augmented reality can further deplete the battery life, making it important for mobile devices to conserve energy and optimize their usage. Strategies such as adjusting display brightness, turning off unused features, and limiting background application activity can provide a way to help extend battery life.

### BRIEF DESCRIPTION OF THE DRAWINGS

Fig. 1 is a block diagram illustrating one embodiment of a device that executes separate network stacks on separate processors to maintain network connectivity.
Fig. 2 is a block diagram illustrating one embodiment of a multiple network-stack architecture supported by the device.
Fig. 3 is a block diagram illustrating one embodiment of a first network stack assisting a second network stack.
Fig. 4 is a block diagram illustrating one embodiment of a proxy layer for a first network stack that is included in a second network stack.
Fig. 5 is a communication diagram illustrating one embodiment of a session keep-alive exchange to offload a communication session from one network stack to the other.
Fig. 6A-6C are flow diagrams illustrating embodiments of methods using the multiple network stack architecture described herein.
Fig. 7A-7C are flow diagrams illustrating embodiments of methods using session keep-alive techniques described herein.
Fig. 8 is a block diagram illustrating one embodiment of an exemplary computer system.
Fig. 9 is a diagram illustrating example applications for systems and devices implementing functionality described herein.

### DETAILED DESCRIPTION

A mobile device's processors can be a significant contributor to its power consumption, especially with increasing demand for faster and more powerful processors. To mitigate this issue, modern processors may support one or more reduced power modes, which can allow a device to reduce power usage when idling or during periods of inactivity. For example, a processor may support one or more sleep modes in which execution of program instructions may be suspended. These modes, however, can be rendered ineffective if a device needs to receive network traffic and execute instructions to process the network traffic. For example, a mobile device may still need to receive text messages, email, notifications, etc. even when a user is not actively using the device, so that these communications are available when a user resumes use of the device. Waking up a processor from a sleep mode to handle this network traffic can defeat the energy savings of using a sleep mode. Finding a balance between power savings and efficient network handling can thus be important for device manufacturers to improve battery life and user experience.

The present disclosure describes embodiments in which a device executes a separate lightweight network stack, which may run on a lower power processor, to maintain network connectivity when functionality of a fuller featured network stack is currently unneeded. As will be described below in various embodiments, a computing device can include first and second processors, which may include a more powerful central processing unit (CPU) and a lesser powerful always on processor (AoP). The first processor executes a first network stack to process a portion of received network traffic while the second processor executes a second network stack to process another portion of the received network traffic. In various embodiments, the first network stack is a fuller featured network stack in contrast to the second network stack, which supports a subset of functions supported by the first network stack. When power conservation is desired, such as during periods of user inactivity, the first processor can enter a reduced power state in which execution of the first network stack is suspended. The second processor, however, can continue to process network traffic routed from the network interface to the second network stack while the first processor remains in the reduced power state. If particular network traffic arrives at the second processor and requests functionality that is not supported by the second network stack, the second processor may buffer the network traffic until the first processor exits the reduced power state or may instruct the first processor to exit the reduced power state to process the network traffic.

In many instances, maintaining connectivity in this manner can reduce the number of instances in which the first processor is awakened and thus reduce the power consumed due to waking up the first processor for network connectivity. For example, in a mobile phone, the second network stack may be executable to receive and store an incoming a text message without using the phone's CPU. Maintaining connectivity in this manner can also increase the number of opportunities in which the first processor can enter the reduced the power mode. For example, a wearable device, such as watch, may be able to communicate, via the first network stack, to a companion device to offload some work. The wearable device can then use the second network stack to receive the result and present it to a user without having to involve the first network stack and the processor responsible for executing that network stack.

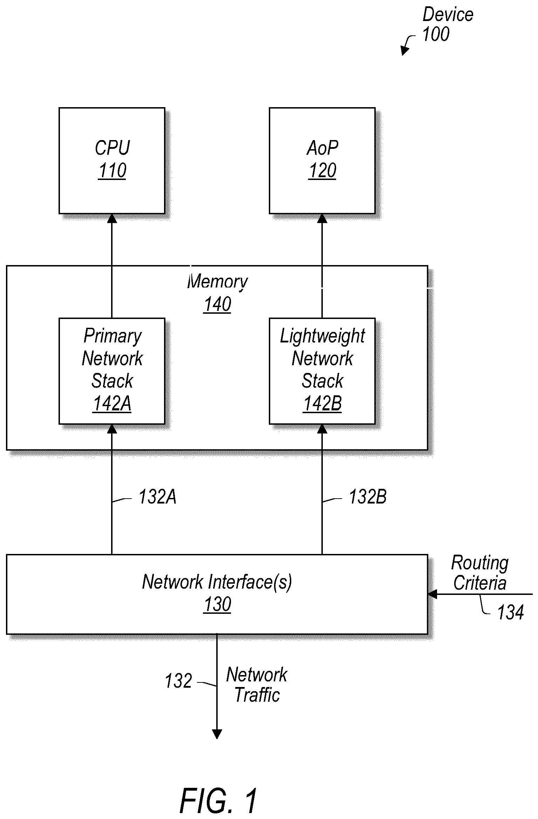

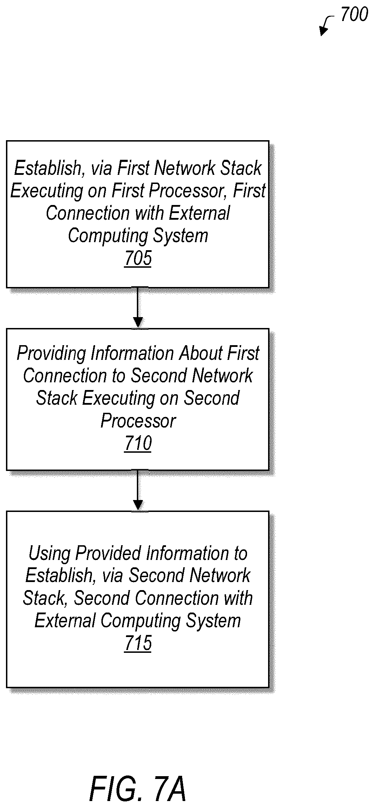

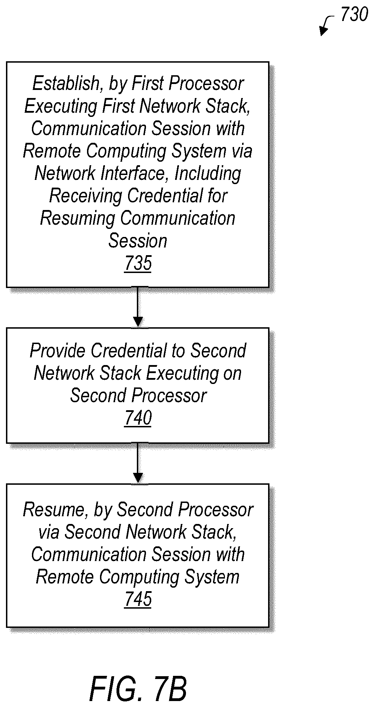

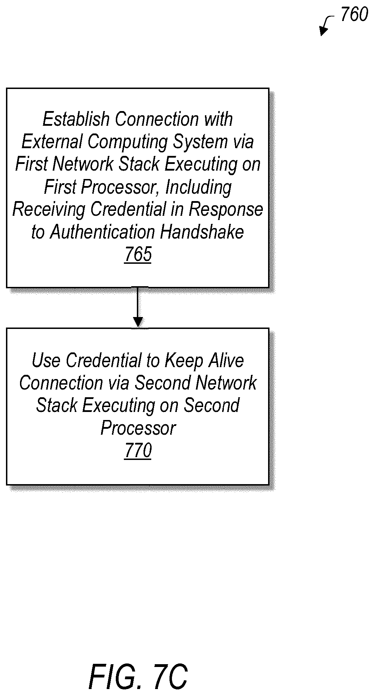

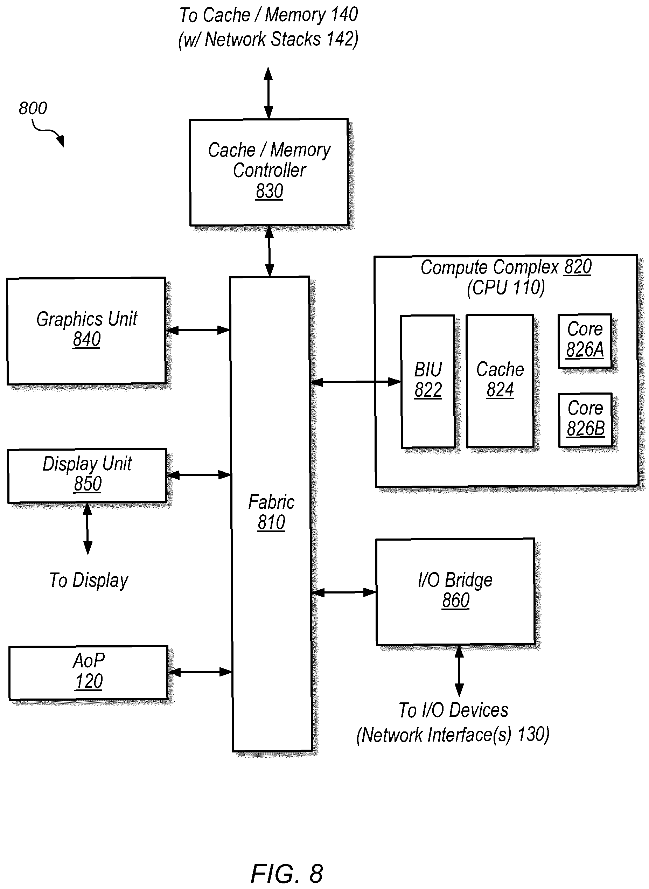

Turning now to Fig. 1, a block diagram of a device 100 that uses multiple network stacks is depicted. Device 100 may correspond to any suitable device such as those listed below with Fig. 7, which, in some embodiments, includes those reliant on battery power such as mobile phones, tablets, watches, laptops, head mounted displays (HMDs), etc. In the illustrated embodiment, device 100 includes a CPU 110, AoP 120, one or more network interfaces 130, and a memory 140, which includes a primary network stack 142A and a lightweight network stack 142B. In some embodiments, device 100 may be implemented differently than shown. For example, device 100 may including various additional components such as discussed with Fig. 8, functionality described with CPU 110 and AoP 120 may be implemented by other types of processors, etc.

CPU 110, in various embodiments, is the primary processor of device 100 configured to execute various software such as an operating system, applications, games, etc. Accordingly, CPU 110 may provide greater performance than AoP 120 but may consume considerably more power than AoP 120. To reduce the power consumption of CPU 110, CPU 110 may support various reduced power modes, which may use dynamic voltage and frequency scaling (DVFS), clock gating, power gating, etc. These modes may also be applicable to CPU 110 as whole or particular portions of CPU 110 such as individual processing cores. In some of these modes, execution of program instructions may be suspended, which can include those of a network stack such as network stack 142A.

AoP 120, in various embodiments, is an auxiliary processor configured to continue executing program instructions to support various functionality when CPU 110 is in a reduced power mode such as executing network stack 142B. To avoid mitigating the benefits of CPU 110's reduced power consumption, AoP 120 may be designed as an efficiency processor having a reduced power consumption relative to CPU 110. For example, AoP 120 may include fewer execution cores, use lower clock frequencies and operating voltages, include less complex execution pipelines, implement a less complex instruction set architecture (ISA), etc. In some embodiments, processor 120 is referred to as "always-on" as device 100 continues to maintain power to AoP 120 while device 100 is powered on-and has ample battery power to sustain operation of AoP 120. In other embodiments, however, device 100 may not implement this always-on functionality with respect to processor 120. In other embodiments, CPU 110 and AoP 120 may have comparable levels of performance and/or power consumption.

Network interface 130 is circuitry configured to enable communication of network traffic 132 with one or more external devices. Network interface 130 may support any suitable radio access technologies (RATs) such as Bluetooth^{®}, Wi-Fi^{®}, ultra-wideband (UWB), cellular technologies (such as long-term evolution (LTE)^{™} or 5G new radio (NR)), etc. Network interface 130 may support wired connectivity such as Ethernet, universal serial bus (USB), fibre channel (FC), etc. Network interface 130 may also include one or more chipsets, which may include radio frequency (RF) circuitry (such as mixers, filters, amplifiers, and oscillators), baseband processing circuitry (such as Digital Signal Processors (DSPs), Analog-to-Digital Converters (ADCs), etc.), or other circuitry configured to implement physical (PHY) and media access control (MAC) layers of a network stack.

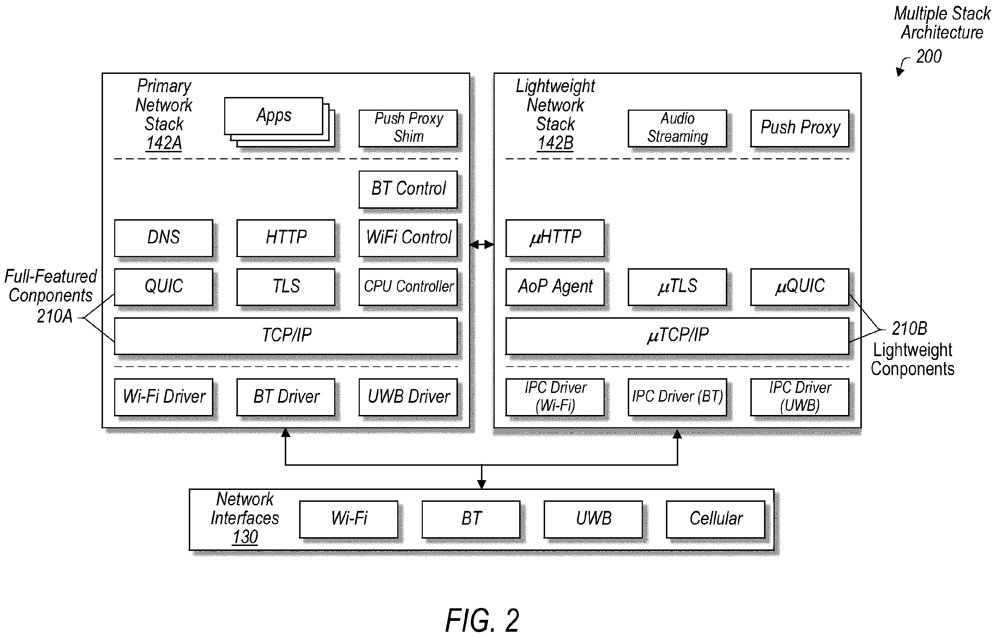

Primary network stack 142A, in various embodiments, is a set of program instructions executable to implement a network stack supporting various networking protocols to process network traffic 132. As will be described in more detail with Fig. 2, stack 142A may include one or more drivers that communicate with network interface 130 to support PHY and MAC layers as well as components to implement network, transport, session, and/or presentation layers. Stack 142A may also include multiple applications consuming network traffic 132 processed by these underlying layers. In the illustrated embodiment, network stack 142A is described as the primary network stack as it executes on CPU 110 and processes the majority of network traffic 132 received by device 100.

As noted above, reliance on primary network stack 142A to solely handle network traffic 132 can interfere with CPU 110's ability to enter a reduced power mode if CPU 110 has to periodically exit the mode to process network traffic 132. In the illustrated embodiment, AoP 120 and a second network stack 142B provide a way to mitigate this need.

Lightweight network stack 142B, in various embodiments, is a set of program instructions executable to implement a lightweight, purpose built networking stack, which may be tailored to specific use cases. As will be described in more detail with Fig. 2, network stack 142B may include a subset of the components included in primary network stack 142A and may implement a subset of the functionality of stack 142A. In the illustrated embodiment, network stack 142B is executed on AOP 120, which enables network stack 142B to process network traffic 132 while CPU 110 has entered a reduced powered state and suspended execution of primary network stack 142A. As one example of a particular use case, lightweight network stack 142B may include components for supporting audio streaming via network interface 130 and audio circuitry coupled to one or more speakers of device 100. This may enable, for example, a user to stream music, a phone call, or some other form of audio (or even video in some embodiments) when device 100 is otherwise idle and without having to consume additional power operating CPU 110. In some embodiments, AoP 120 may also use lightweight network stack 142B to persist one or more network connections while CPU 110 is in a reduced power mode. For example, device 100 may maintain a connection to a cloud service provider that provides various services to device 100 such as cloud storage for images, documents, files, etc. Although primary network stack 142A may initially be used to set up a connection with the cloud service provider, lightweight network stack 142B may enable device 100 to remain connected to the service provider and, in some embodiments, can synchronize data between device 100 and the service provider without involvement of CPU 110. Various other examples will be discussed in greater detail below.

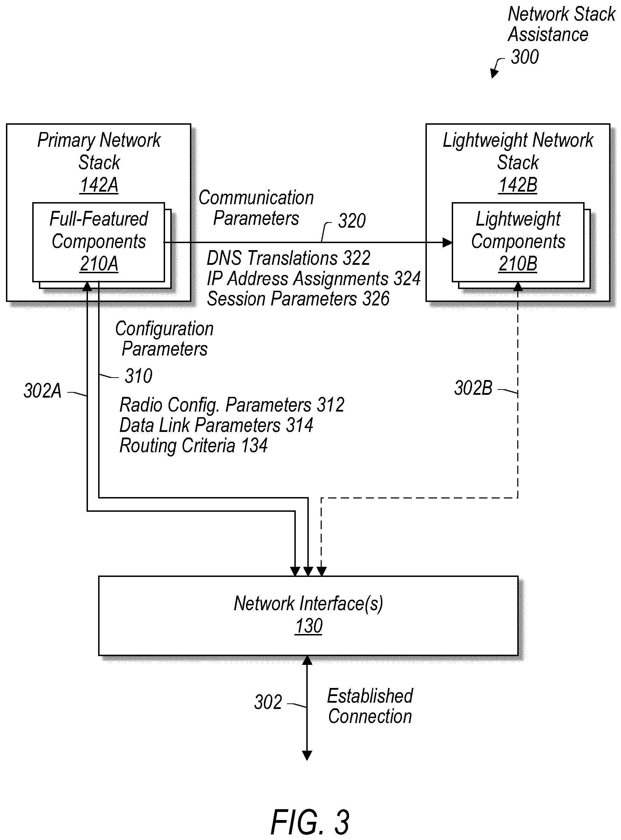

In various embodiments, primary and lightweight network stacks 142 share the same underlying network interface 130 such that interface 130 is configured to communicate network traffic 132 for both network stacks 142. In order to determine how to route the network traffic 132 to network stacks 142A and 142B, network interface 130 may be provisioned with a set of routing criteria 134, which may be specified in various manners. In some embodiments, routing criteria 134 identifies a set of network ports reserved for AoP 120 and network stack 142B, which may be ports associated with user datagram protocol (UDP) or transmission control protocol (TCP). Accordingly, in response to receiving network traffic 132 directed to one of the reserved ports, network interface 130 may provide the network traffic 132B to lightweight network stack 142B for processing. Network interface 130 may then route the remaining network 132A not associated with these network ports to network stack 142A. Routing criteria 134 may also be specified for particular internet protocol (IP) addresses, domain names, etc. In some embodiments, CPU 110 provides routing criteria 134 for primary network stack 142A and lightweight network stack 142B in order reduce the complexity of stack 142B. As will be described below with Fig. 3, CPU 110 and primary network stack 142A may also configure other aspects associated with network interface 130 that go beyond merely providing routing criteria 134.

Various examples of components included in network stacks 142A and 142B will now be discussed to contrast the two network stacks 142.

Turning now to Fig. 2, a block diagram of a multiple stack architecture 200 is depicted. In the illustrated embodiment, primary network stack 142A includes multiple layers of full-featured components 210A while lightweight network stack 142B includes a subset of the components, which may further be lightweight components 210B. Network interfaces 130 also include Wi-Fi^{®}, Bluetooth^{®} (BT), UWB, cellular interfaces. In other embodiments, architecture 200 may be implemented differently than shown. For example, network interfaces 130 may include other interfaces such as near field communication (NFC), etc. Networks stacks 142 may include more (or fewer) components than shown. Although particular components 210B may be described as lightweight in some embodiments, they may implement the same functionality as components 210A in other embodiments.

As shown, network stacks 142 may include a lower layer of components 210, which may implement drivers for the Wi-Fi^{®}, Bluetooth^{®} (BT), UWB, cellular, NFC, or other interfaces. In the illustrated embodiment, components 210A in primary network stack 142A are full-featured drivers executable to configure and manage interfaces 130 as well as communicate network traffic 132 between higher level components 210A in network 142A and interfaces 130. In contrast, components 210B in lightweight network stack 142B may be executable to facilitate inter-process communication (IPC) between interfaces 130 and higher level components 210B but lack the ability to configure and manage interfaces 130.

Network stacks 142 also include various middle layer components 210, which may implement one or more of the network, transport, session, and presentation layers. As shown, primary network stack 142A may include components 210A that support TCP/IP, Quick UDP Internet Connections (QUIC), Transport layer security (TLS), and Hypertext Transfer Protocol (HTTP). In contrast, lightweight network stack 142B may include a lightweight/micro components 210 supporting TCP/IP, QUIC, TLS, and HTTP, which may have removed support for particular protocol functions (e.g., dropping discovery protocols), removed legacy protocols (e.g., µTLS may support only the latest version of TLS), etc. Primary network stack 142A may also include a domain name system (DNS) component 210A, Wi-Fi^{®} and Bluetooth^{®} control components 210A, and CPU controller component 210A, which may not be present in stack 142B. Lightweight network stack 142B may also include an AoP agent for handling traffic 132 specific to AoP, which may not be present in stack 142A.

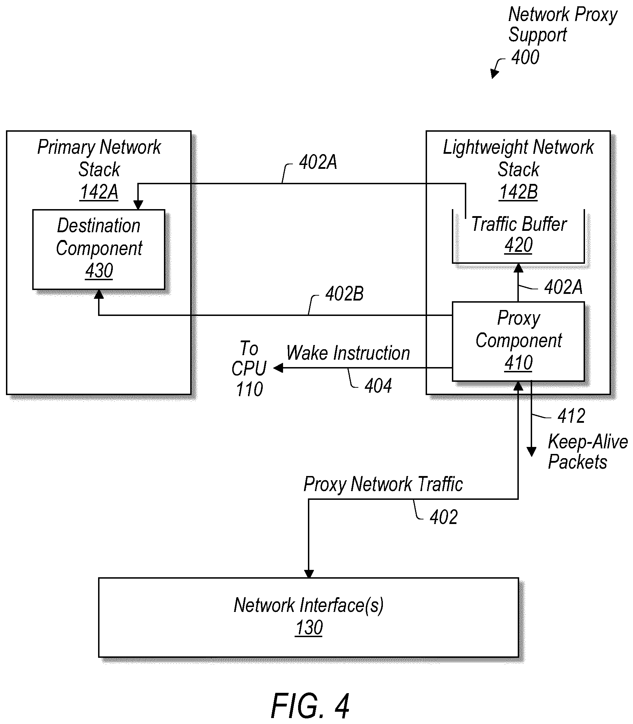

Network stacks 142 may also include upper layer components 210, which may implement the application layers of the network stacks 142. As shown, primary network stack 142A may include the majority of applications such as browsers, mail clients, office suites, games, etc. In the illustrated embodiment, lightweight network stack 142B includes an audio streaming component 210B executable to stream audio content via network interfaces 130, such as streaming audio to a pair of BT headphones, without involving primary network stack 142A. Lightweight network stack 142B also includes a push proxy component 210B, which may implement a proxy for processing push notifications such as discussed below with Fig. 4. Proxy component 210B also may communicate with a corresponding shim component 210A in stack 142A, which may be used to facilitate integration of network stack 142A with the proxy component 210B.

Because network stack 142B may be implemented as a lightweight stack, network stack 142A may rely on the assistance of primary network stack 142A to perform various tasks that are not supported by network stack 142B. As will be discussed next, this assistance can include primary network stack 142A configuring interfaces 130 and providing parameters used by network stack 142B to maintain connections via interfaces 130.

Turning now to Fig. 3, a block diagram of a network stack assistance 300 is depicted. In the illustrated embodiment, assistance 300 includes ones or more components 210A of network stack 142A providing configuration parameters 310 to network interfaces 130 and/or providing communication parameters 320 to one or more lightweight components 210B. In some embodiments, assistance 300 may be implemented differently than shown.

Configuration parameters 310 may include any suitable parameters for initializing and managing network interfaces 130. As shown, parameters 310 may include radio configuration parameters 312 that control operation a radio interface 130. For example, parameters 312 may include those to enable or disable particular radios (or their corresponding RATs), adjust power settings for radios of interfaces 130, select particular frequency bands and channel widths, implement beamforming, etc. Parameters 310 may include data link parameters 314 to establish a data link connection via an interface 130 such as parameters to facilitate device discovery, service set identifiers (SSIDs), security credentials (e.g., passwords, virtual private network (VPN) credentials, etc.), selection of particular protocols, quality of service (QoS) settings, etc. In the case of Wi-Fi^{®}, parameters 314 may be responsible for connection management including activities such as background and opportunistic scans, association, disassociation, link monitoring etc. Parameters 310 may also include routing criteria 134, which, as discussed above, may include particulars network ports, particular IP addresses, particular domain names, etc. For Bluetooth^{®} connections, routing criteria 134 may also include BT logical link control and adaptation layer protocol (L2CAP) channels that are used for general IP traffic, BT specific profiles such as Advanced Audio Distribution Profile (A2DP) used for audio, etc. Routing criteria 134 may also be used to alter an underling routing table used by interfaces 130 such as to add or remove routes, set particular flags, associate particular routes with particular interfaces 130, etc. Relying on primary network stack 142A to be the sole entity responsible for configuring interfaces 130 can allow network stacks 142 to share a common configuration, which can enable lightweight network stack 142B to be simplified while also avoiding a split brain architecture in which both stacks 142 attempt to issue conflicting configuration parameters 310 to network interfaces 130.

Communication parameters 320 may include any suitable parameters that enable lightweight network stack 142B to establish and/or maintain a connection 302 via a network interface 130. In the illustrated embodiment, parameters 320 include DNS translations 322. As noted above with Fig. 2, lightweight network stack 142B may lack a component executable to submit DNS queries for domain names to be translated to their corresponding IP addresses. Network stack 142B may rely on the DNS component 210A in primary network stack 142A to provide the IP addresses for any DNS translations used by lightweight network stack 142B. Parameters 320 may include IP address assignments 324 for interfaces 130. Because networks stacks 142 may share the same underlying network interfaces 130, they may also share the same MAC addresses. Lightweight network stack 142B may, however, not include a dynamic host configuration protocol (DHCP) component executable to obtain an IP address for a MAC address and may thus rely on an IP address obtained by primary network stack 142A. Parameters 320 may also include session parameters 326 obtained from a connection 302A established by primary network stack 142A and used to persist a connection 302B via lightweight network stack 142B. Session parameters 326 may include parameters negotiated when connection 302A was initially established such as during performance of a handshake. These parameters 326 may include source and destination networks ports for a connection 302A, agreed upon particular protocol versions (or agreed upon use of particular features of a protocol), key material used to secure subsequent communications, etc. In some embodiments, one or more of these parameters may be packaged in a session resumption credential that primary network stack 142A can provide to lightweight network stack 142B to resume a connection 302A previously established by stack 142A.

Lightweight network stack 142B may use communication parameters 320 provided by primary (as well as configuration parameters 310 provided to interfaces 130) for a variety of uses. For example, in an embodiment in which device 100 supports phone calls, primary network stack 142A may be used to detect an incoming call and notify the user. If the user accepts the call, communication parameters 320 may be provided to lightweight network stack 142B to take over the call until its termination. As noted above, in some embodiments, network stacks 142 may be used to offload one or more tasks from device 100 to a cloud-based service, companion device, etc. In such an embodiment, primary network stack 142A may be used to set up the connection 302 for offloading the work while lightweight network stack 142B may handle any received results. For example, primary network stack 142A may send a request for navigation directions to an external computing system. Lightweight network stack 142B may be able to receive the requested navigation directions and present them to a user of device 100. Other examples of offloaded work may include sensor processing (e.g., for one or more health sensors included in a wearable device 100, for object detection, for visual localization, etc.), rendering computer generated reality (CGR) content (e.g., augmented reality (AR), virtual reality (VR), or extended reality (XR) content) for display via lightweight network stack 142B, etc.

In some instances, lightweight network stack 142B may still need to involve primary network stack 142A if lightweight network stack 142B is unable to subsequently perform particular functions. In some embodiments discussed next, network stack 142B may implement a proxy that can receive traffic 132 potentially destined for network stack 142A and determine whether to involve stack 142A.

Turning now to Fig. 4, a block diagram of network proxy support 400 is depicted. In the illustrated embodiment, network proxy support 400 is provide by a proxy component 410 in lightweight network 142B, which may use a traffic buffer 420 and a destination component 430 in primary network stack 142A. In some embodiments, network proxy support 400 may be implemented different than shown. For example, device 100 may include multiple instances of components 410-430, each tailored to a particular type of traffic 132.

Proxy component 410 is a set of program instructions executable by AoP 120 to implement a network proxy for primary network stack 142A in which proxy component 410 establishes a connection to receive network traffic 402 on behalf of primary network stack 142A. In some embodiments, establishing this connection may include using parameters 310 and 320 discussed above. As network traffic 402 is received, proxy component 410 may analyze network traffic 402 to determine what functions/tasks are being requested by the traffic 402. If the traffic 402 is requesting functions can be performed by component 410 (or more generally stack 142B), these functions may be performed locally by the AoP 120 without involvement of primary network stack 142A. If, however, traffic 402 is requesting functions that cannot be provided by lightweight network stack 142B, proxy component 410 may determine whether those functions warrant immediate processing by primary network stack 142A or can be delayed until stack 142A becomes available. If those functions can be delayed, proxy component 410 may store the proxy traffic 402A in traffic buffer 420 until it can be retrieved by a destination component 430. In some embodiments, destination component 430 may be implemented by a daemon process, which may be tailored to handle particular traffic 402 (e.g., Push Proxy Shim in Fig. 2) and may convey the traffic 402 to other components in stack 142A for further processing. If the requested functions cannot be delayed, proxy component 410 may provide a wake instruction 404 to cause CPU 110 to exit a reduced power state in which operation of primary network stack 142A is resumed. Although depicted as being provided to CPU 110 in Fig. 4, in some embodiments, AoP 120 may provide this instruction 404 to a power management unit (PMU) coupled to CPU 110 and configured to resume CPU 110's execution of program instructions. Once operation of primary network stack 142A has resumed, proxy component 410 may provide the proxy network traffic 402B so that it can be immediately processed by primary network stack 142A.

Proxy component 410 may assess any of various criteria in determining whether to buffer network traffic 402 or awake CPU 110 for immediate processing. In some embodiments, these criteria are provided by components 210A in network stack 142A such as the applications consuming traffic 402. For example, device 100 may receive push notifications from one or more push notification servers for various ones of the applications executing device 100, which could include a news application that receives notifications about current news events and a messaging application used by a user to communicate text messages (e.g., rich communication services (RCS) messages) to other people. Proxy component 410 may receive criteria from the news application, in this example, indicating that its push notifications should be buffered until primary network stack 142A is otherwise available. Proxy component 410 may also receive criteria from the messaging application indicating that its push notifications should not be buffered and instead be processed upon receipt. In some embodiments, these criteria may include criteria provided by a user. Continuing with the message example, device 100 may support a focus mode that can be set by the user to cause processing of push notifications for messages to be delayed until a preset time or a user deactivates focus mode. In this example, proxy component 410 may buffer all push notifications-or at least only those associated with messages from people who have not been identified by the user as being among the user's preferred contacts.

Proxy component 410 may also perform other tasks beyond merely filtering traffic 402 for primary network stack 142A. In some embodiments, a source of proxy network traffic 402 may require that device 100 periodically interact with it or else the connection will be closed. For example, a server providing push notifications to device 100 may require that device 100 communicate with it at least once every 10 minutes. In the illustrated embodiment, proxy component 410 is executable to periodically send keep-alive packets 412 to a source of proxy network traffic 402 in order to satisfy this connection requirement-thus keeping the connection alive. In doing so, AoP and proxy component 410 are able to keep alive the network connection without involving primary stack 142A and CPU 110 allowing CPU 110 to remain in a reduced power state. In various embodiments, proxy component 410 may also continue to route particular proxy network traffic 402 between network interface 130 and primary network stack 142A even when primary network stack 142A is operational. Serving as a passthrough in this manner may simplify the implementation of the proxy as 1) the proxy need not be set up and torn down each time CPU 110 enters a reduced power mode and 2) component 410 may not need to implement a connection handover, for example.

To offload a network connection from primary network stack 142A to lightweight network stack 142B, primary network stack 142A may initially establish trust with an external computing system, such as a remote server. Lightweight network stack 142B may then leverage this existing trust to persist a network connection with the external computing system-enabling CPU 110 to enter a reduced power state while AoP 120 keeps the connection alive. An exchange illustrating this interaction will now be discussed.

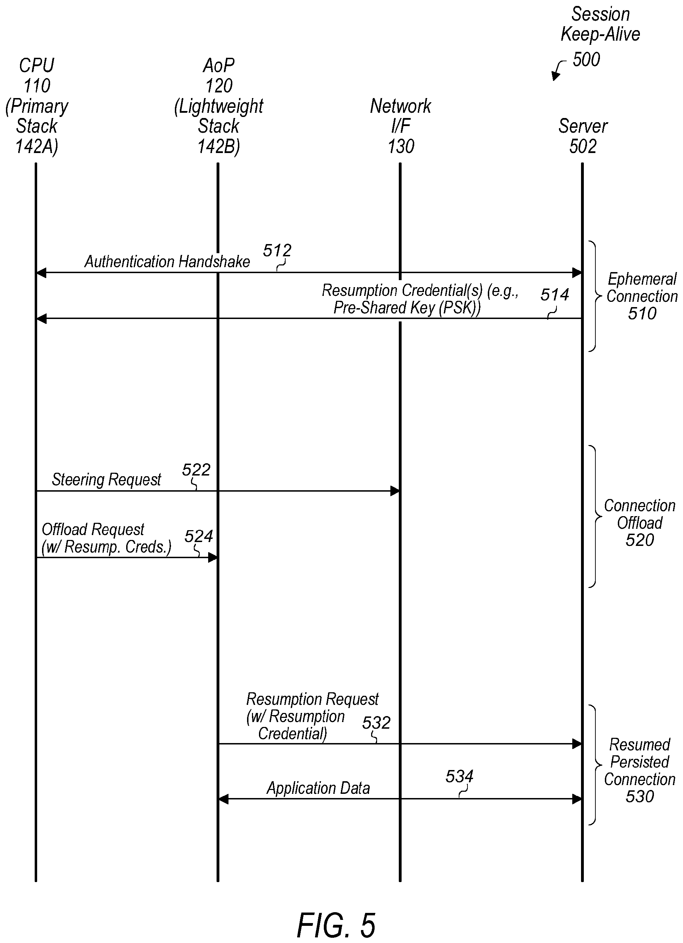

Turning now to Fig. 5, a communication diagram of a session keep-alive 500 is depicted. In the illustrated embodiment, session keep-alive 500 begins with CPU 110's primary network stack 142A establishing an ephemeral connection 510 with a server 502. A connection offload 520 is then performed to enable AoP 120's lightweight stack 142B to resume a persisted connection 530 with the server 502.

Ephemeral connection 510 may generally include communications between primary stack 142A to set up a session with server 502, which can be persisted later on by lightweight stack 142B. As shown, this may initially include an authentication handshake 512 in which server 502 and/or device 100 are authenticated to one another to establish trust. In some embodiments, authentication handshake 512 includes device 100 receiving a public key certificate attesting to a public key of server 502 and verifying the certificate such as by hashing the certificate contents and verifying them against a digital signature included in the certificate. In some embodiments, authentication handshake 512 also provides a client certificate attesting to a public key of the device, which may be verified by server 502. Verification of the certificates may also include performing an authenticated key exchange with server 502 such as elliptic curve Diffie-Hellman (ECDH). In some embodiments in which session keep-alive 500 is performed to keep alive a transport layer security (TLS) session, authentication handshake 512 may include the exchange of a ClientHello, ServerHello, ServerCertificate, ClientCertificate, etc.

In response to a successful authentication, primary stack 142A may receive one or more resumption credentials 514 usable to resume the connection 510 without performing authentication handshaking 512 again including the exchange and verification of certificates. Resumption credential 514 may be implemented using any suitable techniques. For example, in some embodiments, a resumption credential 514 is a token generated by server 502 and indicative of the trust established via handshake 512. This token may key material usable to derive one or more cryptographic keys used to secure connection 530. In some embodiments in which connection 510 is a TLS session, resumption credential is a TLS new session ticket including a pre-shared key (PSK). In some embodiments, primary stack 142A receives a single resumption credential in response to establishing connection 510. In other embodiments, however, primary stack 142A can request a set of multiple resumption credentials 514 in order to reduce the number of instances in which connection 510 is established. In some embodiments, a connection 510 is established solely to establish trust with server 502 and obtain one or more resumption credentials 514 before the connection 510 is closed by primary stack 142A. As such, connection 510 may be described as ephemeral relative to the connection 530 persisted by lightweight stack 142B.

As shown, CPU 110 may initiate a connection offload 520 via primary stack 142A by issuing a steering request 522 to network interface 130 to steer/route subsequently received network traffic from server 502 to lightweight stack 142B. In some embodiments, steering request 522 includes one or more configuration parameters 310 discussed above such as new routing criteria 134. Primary stack 142A may then provide an offload request 524 including the one or more resumption credentials 514 to lightweight stack 142B. In some embodiments, offload request 524 may include other communication parameters 320 discussed above such as the IP address of server 502 obtained by a DNS translation 322 performed by primary stack 142A. At this point, CPU 110 may enter a reduced power state in which operation of primary stack 142A is suspended.

AoP 120's lightweight stack 142B may then establish a resumed persisted connection 530 with server 502, by sending a resumption request 532 including the resumption credential 514, which may be verified and used by server 502 to resume connection 530. In some embodiments, resuming connection 530 may include AoP 120 deriving, via network stack 142B, one or more cryptographic keys from key material included in a credential 514 and securing communication for connection 530 using the derived cryptographic key. In some embodiments in which connection 530 is a TLS session, request 532 is a ClientHello including a PSK used to secure communication with server 502. By using credential 514, lightweight stack 142B is leveraging the trust established by primary stack 142A during ephemeral connection 510 and without having to perform another authentication handshake 512-thus, establishing connection 530 may be more light weight than establishing connection 510.

AoP 120 may continue to persist connection 530 while CPU 110 is in a reduced power state in which operation of network stack 142A is suspended. In some embodiments, keeping the connection alive may include lightweight stack 142B needing to communicate with server 502 at a regular cadence to persist connection 530. For example, server 502 may implement a rule in which server 502 closes a connection if server 502 does not receive any corresponding communication from device 100 within a ten minute interval. Thus, lightweight stack 142B may send a communication (e.g., a heartbeat signal) once every ten minutes to keep the connection 530 alive. AoP 120 may persist connection 530 for any of various purposes. For example, as noted above, AoP 120 may persist a connection 530 to implement a network proxy that receives network traffic destined for network stack 142 such as to receive one or more push notifications from a push notification service implemented by server 502. In some embodiments, if persisted connection 530 is dropped or fails, lightweight stack 142B can make one or more attempts to reestablish connection 530. If, however, a threshold number of attempts is met (or an error is encountered that lightweight stack 142B is unable to overcome), device 100 may fall back to using CPU 110 and primary stack 142A to attempt to reestablish ephemeral connection 510 before resuming connection 530.

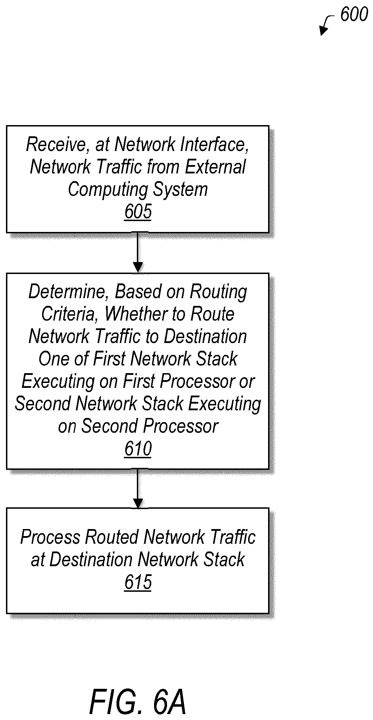

Turning now to Fig. 6A, a flow diagram of a method 600 is depicted. Method 600 is one embodiment of a method that may performed by a device including a network interface and executing a first and second network stacks on separate processors such as device 100. In some instances, performance of method 600 allows for more efficient communication of network traffic.

In step 605, the device receives, at the network interface (e.g., network interface 130), network traffic (e.g., network traffic 132) from an external computing system.

In step 610, the network interface determines, based on a set of routing criteria, whether to route the network traffic to a destination one of a first network stack (e.g., primary network stack 142A) executing on the first processor or a second network stack (e.g., lightweight network stack 142B) executing on the second processor. In some embodiments, the second processor is an efficiency processor (e.g., AoP 120) having a reduced power consumption relative to the first processor (e.g., CPU 110). In some embodiments, the first processor configures the network interface, including the first processor providing routing criteria (e.g., routing criteria 134) for routing network traffic for the second processor. In some embodiments, the provided routing criteria includes a set of network ports or internet protocol (IP) addresses reserved for the second processor by the first processor.

In step 615, the device processes the routed network traffic at the destination network stack. In various embodiments, the second network stack supports a subset of functions supported by the first network stack. In some embodiments, the first processor enters a reduced power state in which operation of the first network stack is suspended; the second processor processes, via the second network stack, network traffic routed to the second processor while the first processor is in the reduced power state.

In various embodiments, method 600 further includes the first processor negotiating, via the first network stack, one or more parameters associated with a connection of the device via the network interface and provides the one or more parameters (e.g., communication parameters 320) to the second processor to facilitate the connection via the second network stack. In some embodiments, one of the one or more parameters includes a session resumption credential.

In various embodiments, the second processor implements, via the second network stack, a network proxy (e.g., proxy component 410) for the first processor. In some embodiments, implementing the network proxy includes analyzing network traffic routed to the second network stack, to determine whether the analyzed network traffic requests a function that is not included in the subset of functions supported by the second network stack. Based on the requested function, the second processor provides the analyzed network traffic to the first network stack. In some embodiments, providing the analyzed network traffic includes the second processor instructing (e.g., wake instruction 404) the first processor to exit a reduced power state in which operation of the first network stack is suspended. In some embodiments, the analyzed network traffic includes a push notification requesting a function of an application executing on the first processor.

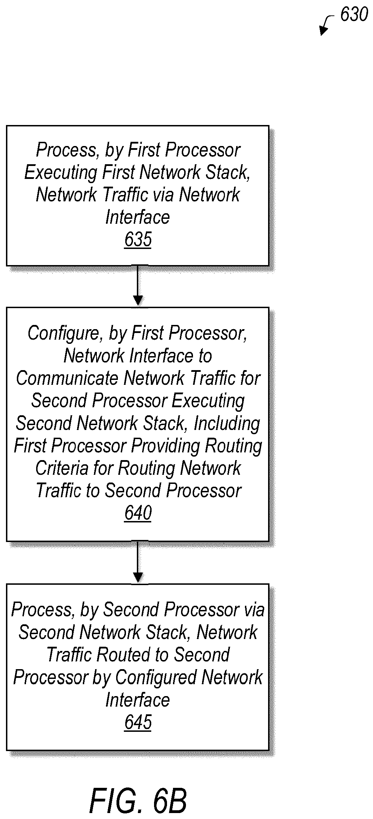

Turning now to Fig. 6B, a flow diagram of a method 630 is depicted. Method 630 is another embodiment of a method that may performed by first and second processors executing respective networks stacks such as CPU 110 and AoP 120. In some instances, performance of method 630 allows multiple network stacks to share a network interface.

In step 635, a first processor executes a first network stack (e.g., primary network stack 142A) of a device and processes network traffic (e.g., network traffic 132) via a network interface (e.g., network interface 130) of the device.

In step 640, the first processor configures the network interface to communicate network traffic for a second processor executing a second network stack (e.g., lightweight network stack 142B) of the device. In various embodiments, the configuring includes the first processor providing routing criteria (e.g., routing criteria 134) for routing network traffic to the second processor. In some embodiments, the second processor is an efficiency processor having a reduced power consumption relative to the first processor. In some embodiments, the routing criteria includes a set of network ports to be reserved for the second processor. In some embodiments, the configuring includes instructing the network interface to enable a radio access technology (RAT) for use by the second processor. In some embodiments, the configuring includes adjusting a power setting (e.g., radio configuration parameters 312) for a radio of the network interface.

In step 645, the second processor processing, via the second network stack, network traffic routed to the second processor by the configured network interface. In some embodiments, the second processor is configured to keep alive a network connection of the device while the first processor is in a reduced power state in which operation of the first network stack is suspended.

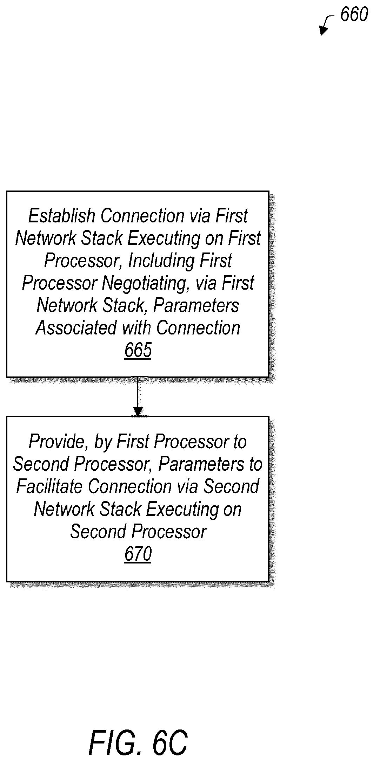

Turning now to Fig. 6C, a flow diagram of a method 660 is depicted. Method 660 is one embodiment of another method that may performed by a device executing a first network stack assisting a second network such as device 100. In some instances, performance of method 660 allows use of a second, lightweight network stack.

In step 665, the device establishes a connection (e.g., connection 302) via a first network stack (e.g., primary network stack 142A) executing on a first processor (e.g., CPU 110) of the device. In various embodiments, the establishing includes the first processor negotiating, via the first network stack, one or more parameters associated with the connection of the device. In some embodiments, the negotiating includes the first processor determining, via the first network stack, source and destination ports for the connection; the one or more parameters including the source and destination ports. In some embodiments, the negotiating includes the first processor includes performing, via the first network stack, a handshake that includes receiving a session resumption credential; the one or more parameters include the session resumption credential.

In step 670, the first processor providing, to a second processor (e.g., AoP 120) of the device, the one or more parameters (e.g., communication parameters 320) to facilitate the connection via a second network stack (e.g. lightweight network stack 142B) executing on the second processor. In some embodiments, the second processor persists, via the second network stack, the connection while the first processor is in a reduced power state in which operation of the first network stack is suspended. In some embodiments, the second processor implements, based on the one or more parameters and via the second network stack, a proxy for the first network stack.

Turning now to Fig. 7A, a flow diagram of a method 700 is depicted. Method 700 is another embodiment of a method that may be performed by a device including a network interface and executing a first and second network stacks on separate processors such as device 100.

In step 705, the device establishes, via a first network stack (e.g., primary network stack 142A) executing on the first processor, a first connection with an external computing system. In various embodiments, establishing the first connection includes performing an authentication exchange (e.g., authentication handshake 512) with the external computing system and receiving a credential (e.g., resumption credential 514) for the second network stack to establish a second connection with the external computing system. In some embodiments, the authentication exchange includes verifying, via the first network stack, a received server certificate attesting to a public key of the external computing system, the authentication exchange includes providing, via the first network stack, a client certificate attesting to a public key of the device.

In step 710, the device provides information (e.g., offload request 524) about the first connection to a second network stack (e.g., lightweight network stack 142B) executing on the second processor. In some embodiments, the provided information includes the received credential.

In step 715, the device uses the provided information to establish, via the second network stack, establish a second connection with the external computing system. In some embodiments, establishing the second connection includes the second processor communicating with the external computing system without verifying the server certificate again via the second network stack. In some embodiments, establishing the second connection includes the second processor communicating with the external computing system without providing the client certificate again. In some embodiments, establishing the second connection includes deriving, via the second network stack, a cryptographic key from key material included in a credential received in the provided information and securing, via the second network stack, communication with the external computing system using the derived cryptographic key. In some embodiments, the credential is a transport layer security (TLS) session resumption token including a pre-shared key (PSK).

In some embodiments, method 700 further includes the first processor entering a reduced power state in which operation of the first network stack is suspended and the second processor communicating, via the second network stack, with the external computing system while the first processor is in the reduced power state.

In some embodiments, method 700 further includes the second processor implementing, via the second network stack, a network proxy (e.g., proxy component 410) for the first processor. In such an embodiment, implementing the network proxy includes analyzing network traffic routed to the second network stack, to determine whether the analyzed network traffic requests a function that is not included in a subset of functions supported by the second network stack and, based on the requested function, the second processor providing the analyzed network traffic to the first network stack. In some embodiments, the analyzed network traffic includes a push notification requesting a function of an application executing on the first processor.

Turning now to Fig. 7B, a flow diagram of a method 730 is depicted. Method 730 is another embodiment of a method by first and second processors executing respective networks stacks such as CPU 110 and AoP 120.

Method 730 begins in step 735 with a first processor executing a first network stack (e.g., primary network stack 142A) establishing a communication session with a remote computing system (e.g., server 502) via a network interface (e.g., network interfaces 130) of the device. In various embodiments, the establishing includes receiving a credential (e.g., credential 514) for resuming the communication session. In step 740, the first processor provides the credential to a second network stack (e.g., lightweight network stack 142B) executing on a second processor of the device. In step 745, the second processor resumes, via the second network stack, the communication session with the remote computing system. In some embodiments, the second processor is an efficiency processor having a reduced power consumption relative to the first processor; the second processor is configured to keep alive the communication session while the first processor is in a reduced power state in which operation of the first network stack is suspended. In some embodiments, prior to the resuming, the first processor via the first network stack instructs the network interface to steer network traffic associated with the resumed communication session to the second network stack. In some embodiments, the credential is a transport layer security (TLS) new session ticket including a pre-shared key (PSK); the resuming includes performing a TLS handshake using the PSK. In some embodiments, the establishing includes receiving a plurality of credentials in response to a single authentication handshake; the resuming includes selecting one of the credentials for resuming the communication session.

Turning now to Fig. 7C, a flow diagram of a method 760 is depicted. Method 760 is one embodiment of another method that may performed by a device executing a first network stack assisting a second network such as device 100.

Method 760 begins in step 765 with establishing a connection (e.g., ephemeral connection 510) with an external computing system (e.g., server 502) via a first network stack (e.g., primary network stack 142A) executing on a first processor of the device. In various embodiments, the establishing includes receiving a credential (e.g., credential 514) in response to an authentication handshake (authentication handshake 512). In step 770, the credential is used to keep alive the connection (e.g., persisted connection 530) via a second network stack (e.g., lightweight network stack 142B) executing on a second processor of the device. In some embodiments, keeping the connection alive includes persisting, by the second processor via the second network stack, the connection while the first processor is in a reduced power state in which operation of the first network stack is suspended. In some embodiments, keeping the connection alive includes communicating, via the second network stack, with the external computing system at a regular cadence to persist the connection. In some embodiments, the external computing system implements a push notification service; the communicating includes receiving, via the second network stack, one or more push notifications over the persisted connection. In some embodiments, keeping the connection alive includes implementing, vi the second network stack, a network proxy (e.g., proxy component 410) that receives network traffic destined for the first network stack.

### Exemplary Computer System

Turning now to Fig. 8, a block diagram illustrating an example embodiment of a device 800 is shown. In some embodiments device 800 may implement functionality of device 100. In some embodiments, elements of device 800 may be included within a system on a chip. In some embodiments, device 800 may be included in a mobile computing device, which may be battery-powered. Therefore, power consumption by device 800 may be an important design consideration. In the illustrated embodiment, device 800 includes fabric 810, compute complex 820 input/output (I/O) bridge 860, cache/memory controller 830, graphics unit 840, display unit 850, and AoP 102. In some embodiments, device 800 may include other components (not shown) in addition to or in place of the illustrated components, such as video processor encoders and decoders, image processing or recognition elements, computer vision elements, etc.

Fabric 810 may include various interconnects, buses, MUX's, controllers, etc., and may be configured to facilitate communication between various elements of device 800. In some embodiments, portions of fabric 810 may be configured to implement various different communication protocols. In other embodiments, fabric 810 may implement a single communication protocol and elements coupled to fabric 810 may convert from the single communication protocol to other communication protocols internally.

In the illustrated embodiment, compute complex 820 includes bus interface unit (BIU) 822, cache 824, and cores 826A-B. In various embodiments, compute complex 820 may include various numbers of processors, processor cores and caches. For example, compute complex 820 may include 1, 2, or 4 processor cores, or any other suitable number. In one embodiment, cache 824 is a set associative L2 cache. In some embodiments, cores 826A-B may include internal instruction and data caches. In some embodiments, a coherency unit (not shown) in fabric 810, cache 824, or elsewhere in device 800 may be configured to maintain coherency between various caches of device 800. BIU 822 may be configured to manage communication between compute complex 820 and other elements of device 800. Processor cores such as cores 826A-B may be configured to execute instructions of a particular instruction set architecture (ISA) which may include operating system instructions and user application instructions. These instructions may be stored in computer readable medium such as a memory coupled to memory controller 830 discussed below.

As used herein, the term "coupled to" may indicate one or more connections between elements, and a coupling may include intervening elements. For example, in Fig. 8, graphics unit 840 may be described as "coupled to" a memory through fabric 810 and cache/memory controller 830. In contrast, in the illustrated embodiment of Fig. 8, graphics unit 840 is "directly coupled" to fabric 810 because there are no intervening elements.

Cache/memory controller 830 may be configured to manage transfer of data between fabric 810 and one or more caches and memories. For example, cache/memory controller 830 may be coupled to an L3 cache, which may in turn be coupled to a system memory. In other embodiments, cache/memory controller 830 may be directly coupled to a memory. In some embodiments, cache/memory controller 830 may include one or more internal caches. Memory coupled to controller 830 may be any type of volatile memory, such as dynamic random access memory (DRAM), synchronous DRAM (SDRAM), double data rate (DDR, DDR2, DDR3, etc.) SDRAM (including mobile versions of the SDRAMs such as mDDR3, etc., and/or low power versions of the SDRAMs such as LPDDR4, etc.), RAMBUS DRAM (RDRAM), static RAM (SRAM), etc. One or more memory devices may be coupled onto a circuit board to form memory modules such as single inline memory modules (SIMMs), dual inline memory modules (DIMMs), etc. Alternatively, the devices may be mounted with an integrated circuit in a chip-on-chip configuration, a package-on-package configuration, or a multi-chip module configuration. Memory coupled to controller 830 may be any type of non-volatile memory such as NAND flash memory, NOR flash memory, nano RAM (NRAM), magneto-resistive RAM (MRAM), phase change RAM (PRAM), Racetrack memory, Memristor memory, etc. As noted above, this memory may store program instructions, such as primary network stack 142A and lightweight network stack 142B, executable by compute complex 820 to cause device 800 to perform functionality described herein.

Graphics unit 840 may include one or more processors, e.g., one or more graphics processing units (GPUs). Graphics unit 840 may receive graphics-oriented instructions, such as OPENGL^{®}, Metal^{®}, or DIRECT3D^{®} instructions, for example. Graphics unit 840 may execute specialized GPU instructions or perform other operations based on the received graphics-oriented instructions. Graphics unit 840 may generally be configured to process large blocks of data in parallel and may build images in a frame buffer for output to a display, which may be included in the device or may be a separate device. Graphics unit 840 may include transform, lighting, triangle, and rendering engines in one or more graphics processing pipelines. Graphics unit 840 may output pixel information for display images. Graphics unit 840, in various embodiments, may include programmable shader circuitry which may include highly parallel execution cores configured to execute graphics programs, which may include pixel tasks, vertex tasks, and compute tasks (which may or may not be graphics-related).

Display unit 850 may be configured to read data from a frame buffer and provide a stream of pixel values for display. Display unit 850 may be configured as a display pipeline in some embodiments. Additionally, display unit 850 may be configured to blend multiple frames to produce an output frame. Further, display unit 850 may include one or more interfaces (e.g., MIPI^{®} or embedded display port (eDP)) for coupling to a user display (e.g., a touchscreen or an external display).

I/O bridge 860 may include various elements configured to implement: universal serial bus (USB) communications, security, audio, and low-power always-on functionality, for example. I/O bridge 860 may also include interfaces such as pulse-width modulation (PWM), general-purpose input/output (GPIO), serial peripheral interface (SPI), and inter-integrated circuit (I2C), for example. Various types of peripherals and devices may be coupled to device 800 via I/O bridge 860.

In some embodiments, device 800 includes network interface circuitry (not explicitly shown), which may be connected to fabric 810 or I/O bridge 860. The network interface circuitry may be configured to communicate via various networks, which may be wired, wireless, or both. For example, the network interface circuitry may be configured to communicate via a wired local area network, a wireless local area network (e.g., via Wi-Fi^{®}), or a wide area network (e.g., the Internet or a virtual private network). In some embodiments, the network interface circuitry is configured to communicate via one or more cellular networks that use one or more radio access technologies. In some embodiments, the network interface circuitry is configured to communicate using device-to-device communications (e.g., Bluetooth^{®} or Wi-Fi^{®} Direct), etc. In various embodiments, the network interface circuitry may provide device 800 with connectivity to various types of other devices and networks.

### Example Applications

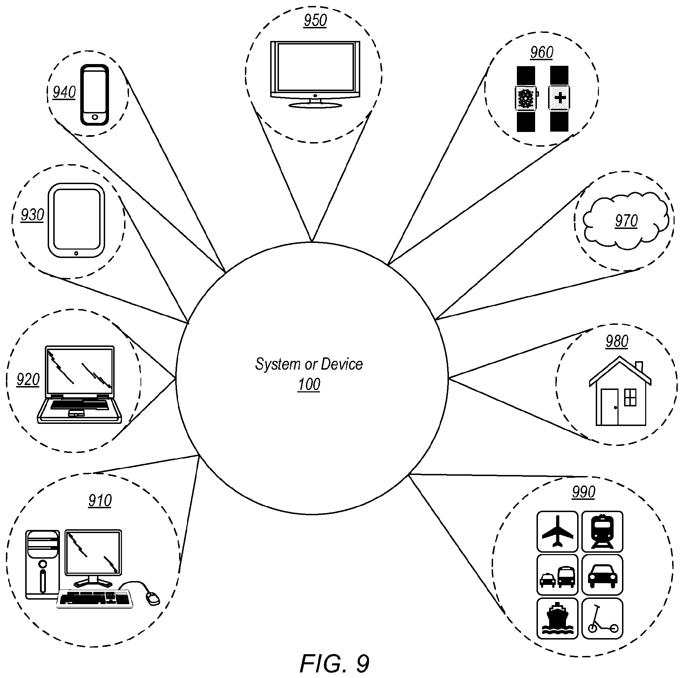

Turning now to Fig. 9, various types of systems that may include any of the circuits, devices, or system discussed above. System or device 100, which may incorporate or otherwise utilize one or more of the techniques described herein, may be utilized in a wide range of areas. For example, system or device 100 may be utilized as part of the hardware of systems such as a desktop computer 910, laptop computer 920, tablet computer 930, cellular or mobile phone 940, or television 950 (or set-top box coupled to a television).

Similarly, disclosed elements may be utilized in a wearable device 960, such as a smartwatch or a health-monitoring device. Smartwatches, in many embodiments, may implement a variety of different functions-for example, access to email, cellular service, calendar, health monitoring, etc. A wearable device may also be designed solely to perform health-monitoring functions, such as monitoring a user's vital signs, performing epidemiological functions such as contact tracing, providing communication to an emergency medical service, etc. Other types of devices are also contemplated, including devices worn on the neck, devices implantable in the human body, glasses or a helmet designed to provide computer-generated reality experiences such as those based on augmented and/or virtual reality, etc.

System or device 900 may also be used in various other contexts. For example, system or device 900 may be utilized in the context of a server computer system, such as a dedicated server or on shared hardware that implements a cloud-based service 970. Still further, system or device 900 may be implemented in a wide range of specialized everyday devices, including devices 980 commonly found in the home such as refrigerators, thermostats, security cameras, etc. The interconnection of such devices is often referred to as the "Internet of Things" (IoT). Elements may also be implemented in various modes of transportation. For example, system or device 900 could be employed in the control systems, guidance systems, entertainment systems, etc. of various types of vehicles 990.

The applications illustrated in Fig. 9 are merely exemplary and are not intended to limit the potential future applications of disclosed systems or devices. Other example applications include, without limitation: portable gaming devices, music players, data storage devices, unmanned aerial vehicles, etc.

The present disclosure includes references to "an embodiment" or groups of "embodiments" (e.g., "some embodiments" or "various embodiments"). Embodiments are different implementations or instances of the disclosed concepts. References to "an embodiment," "one embodiment," "a particular embodiment," and the like do not necessarily refer to the same embodiment. A large number of possible embodiments are contemplated, including those specifically disclosed, as well as modifications or alternatives that fall within the spirit or scope of the disclosure.

This disclosure may discuss potential advantages that may arise from the disclosed embodiments. Not all implementations of these embodiments will necessarily manifest any or all of the potential advantages. Whether an advantage is realized for a particular implementation depends on many factors, some of which are outside the scope of this disclosure. In fact, there are a number of reasons why an implementation that falls within the scope of the claims might not exhibit some or all of any disclosed advantages. For example, a particular implementation might include other circuitry outside the scope of the disclosure that, in conjunction with one of the disclosed embodiments, negates or diminishes one or more of the disclosed advantages. Furthermore, suboptimal design execution of a particular implementation (e.g., implementation techniques or tools) could also negate or diminish disclosed advantages. Even assuming a skilled implementation, realization of advantages may still depend upon other factors such as the environmental circumstances in which the implementation is deployed. For example, inputs supplied to a particular implementation may prevent one or more problems addressed in this disclosure from arising on a particular occasion, with the result that the benefit of its solution may not be realized. Given the existence of possible factors external to this disclosure, it is expressly intended that any potential advantages described herein are not to be construed as claim limitations that must be met to demonstrate infringement. Rather, identification of such potential advantages is intended to illustrate the type(s) of improvement available to designers having the benefit of this disclosure. That such advantages are described permissively (e.g., stating that a particular advantage "may arise") is not intended to convey doubt about whether such advantages can in fact be realized, but rather to recognize the technical reality that realization of such advantages often depends on additional factors.

Unless stated otherwise, embodiments are non-limiting. That is, the disclosed embodiments are not intended to limit the scope of claims that are drafted based on this disclosure, even where only a single example is described with respect to a particular feature. The disclosed embodiments are intended to be illustrative rather than restrictive, absent any statements in the disclosure to the contrary. The application is thus intended to permit claims covering disclosed embodiments, as well as such alternatives, modifications, and equivalents that would be apparent to a person skilled in the art having the benefit of this disclosure.

For example, features in this application may be combined in any suitable manner. Accordingly, new claims may be formulated during prosecution of this application (or an application claiming priority thereto) to any such combination of features. In particular, with reference to the appended claims, features from dependent claims may be combined with those of other dependent claims where appropriate, including claims that depend from other independent claims. Similarly, features from respective independent claims may be combined where appropriate.

Accordingly, while the appended dependent claims may be drafted such that each depends on a single other claim, additional dependencies are also contemplated. Any combinations of features in the dependent that are consistent with this disclosure are contemplated and may be claimed in this or another application. In short, combinations are not limited to those specifically enumerated in the appended claims.

Where appropriate, it is also contemplated that claims drafted in one format or statutory type (e.g., apparatus) are intended to support corresponding claims of another format or statutory type (e.g., method).

Because this disclosure is a legal document, various terms and phrases may be subject to administrative and judicial interpretation. Public notice is hereby given that the following paragraphs, as well as definitions provided throughout the disclosure, are to be used in determining how to interpret claims that are drafted based on this disclosure.

References to a singular form of an item (i.e., a noun or noun phrase preceded by "a," "an," or "the") are, unless context clearly dictates otherwise, intended to mean "one or more." Reference to "an item" in a claim thus does not, without accompanying context, preclude additional instances of the item. A "plurality" of items refers to a set of two or more of the items.

The word "may" is used herein in a permissive sense (i.e., having the potential to, being able to) and not in a mandatory sense (i.e., must).

The terms "comprising" and "including," and forms thereof, are open-ended and mean "including, but not limited to."

When the term "or" is used in this disclosure with respect to a list of options, it will generally be understood to be used in the inclusive sense unless the context provides otherwise. Thus, a recitation of "x or y" is equivalent to "x or y, or both," and thus covers 1) x but not y, 2) y but not x, and 3) both x and y. On the other hand, a phrase such as "either x or y, but not both" makes clear that "or" is being used in the exclusive sense.

A recitation of "w, x, y, or z, or any combination thereof" or "at least one of ... w, x, y, and z" is intended to cover all possibilities involving a single element up to the total number of elements in the set. For example, given the set [w, x, y, z], these phrasings cover any single element of the set (e.g., w but not x, y, or z), any two elements (e.g., w and x, but not y or z), any three elements (e.g., w, x, and y, but not z), and all four elements. The phrase "at least one of ... w, x, y, and z" thus refers to at least one element of the set [w, x, y, z], thereby covering all possible combinations in this list of elements. This phrase is not to be interpreted to require that there is at least one instance of w, at least one instance of x, at least one instance of y, and at least one instance of z.

Various "labels" may precede nouns or noun phrases in this disclosure. Unless context provides otherwise, different labels used for a feature (e.g., "first circuit," "second circuit," "particular circuit," "given circuit," etc.) refer to different instances of the feature. Additionally, the labels "first," "second," and "third" when applied to a feature do not imply any type of ordering (e.g., spatial, temporal, logical, etc.), unless stated otherwise.

The phrase "based on" or is used to describe one or more factors that affect a determination. This term does not foreclose the possibility that additional factors may affect the determination. That is, a determination may be solely based on specified factors or based on the specified factors as well as other, unspecified factors. Consider the phrase "determine A based on B." This phrase specifies that B is a factor that is used to determine A or that affects the determination of A. This phrase does not foreclose that the determination of A may also be based on some other factor, such as C. This phrase is also intended to cover an embodiment in which A is determined based solely on B. As used herein, the phrase "based on" is synonymous with the phrase "based at least in part on."

The phrases "in response to" and "responsive to" describe one or more factors that trigger an effect. This phrase does not foreclose the possibility that additional factors may affect or otherwise trigger the effect, either jointly with the specified factors or independent from the specified factors. That is, an effect may be solely in response to those factors, or may be in response to the specified factors as well as other, unspecified factors. Consider the phrase "perform A in response to B." This phrase specifies that B is a factor that triggers the performance of A, or that triggers a particular result for A. This phrase does not foreclose that performing A may also be in response to some other factor, such as C. This phrase also does not foreclose that performing A may be jointly in response to B and C. This phrase is also intended to cover an embodiment in which A is performed solely in response to B. As used herein, the phrase "responsive to" is synonymous with the phrase "responsive at least in part to." Similarly, the phrase "in response to" is synonymous with the phrase "at least in part in response to."

Within this disclosure, different entities (which may variously be referred to as "units," "circuits," other components, etc.) may be described or claimed as "configured" to perform one or more tasks or operations. This formulation-[entity] configured to [perform one or more tasks]-is used herein to refer to structure (i.e., something physical). More specifically, this formulation is used to indicate that this structure is arranged to perform the one or more tasks during operation. A structure can be said to be "configured to" perform some task even if the structure is not currently being operated. Thus, an entity described or recited as being "configured to" perform some task refers to something physical, such as a device, circuit, a system having a processor unit and a memory storing program instructions executable to implement the task, etc. This phrase is not used herein to refer to something intangible.

In some cases, various units/circuits/components may be described herein as performing a set of tasks or operations. It is understood that those entities are "configured to" perform those tasks/operations, even if not specifically noted.

The term "configured to" is not intended to mean "configurable to." An unprogrammed FPGA, for example, would not be considered to be "configured to" perform a particular function. This unprogrammed FPGA may be "configurable to" perform that function, however. After appropriate programming, the FPGA may then be said to be "configured to" perform the particular function.

For purposes of United States patent applications based on this disclosure, reciting in a claim that a structure is "configured to" perform one or more tasks is expressly intended not to invoke 35 U.S.C. § 112(f) for that claim element. Should Applicant wish to invoke Section 112(f) during prosecution of a United States patent application based on this disclosure, it will recite claim elements using the "means for" [performing a function] construct.

Different "circuits" may be described in this disclosure. These circuits or "circuitry" constitute hardware that includes various types of circuit elements, such as combinatorial logic, clocked storage devices (e.g., flip-flops, registers, latches, etc.), finite state machines, memory (e.g., random-access memory, embedded dynamic random-access memory), programmable logic arrays, and so on. Circuitry may be custom designed, or taken from standard libraries. In various implementations, circuitry can, as appropriate, include digital components, analog components, or a combination of both. Certain types of circuits may be commonly referred to as "units" (e.g., a decode unit, an arithmetic logic unit (ALU), functional unit, memory management unit (MMU), etc.). Such units also refer to circuits or circuitry.

The disclosed circuits/units/components and other elements illustrated in the drawings and described herein thus include hardware elements such as those described in the preceding paragraph. In many instances, the internal arrangement of hardware elements within a particular circuit may be specified by describing the function of that circuit. For example, a particular "decode unit" may be described as performing the function of "processing an opcode of an instruction and routing that instruction to one or more of a plurality of functional units," which means that the decode unit is "configured to" perform this function. This specification of function is sufficient, to those skilled in the computer arts, to connote a set of possible structures for the circuit.

Various embodiments of keeping a session alive are contemplated based on the preceding description, including, but not limited to, the embodiments listed below.
1. A device, comprising:
   first and second processors;
   a network interface; and
   memory having program instructions stored therein that are executable by the first and second processors to cause the device to perform operations including:
      establishing, via a first network stack executing on the first processor, a first connection with an external computing system; and
      providing information about the first connection to a second network stack executing on the second processor; and
      using the provided information to establish, via the second network stack, a second connection with the external computing system.
2. The device of embodiment 1, wherein establishing the first connection includes:
   performing an authentication exchange with the external computing system; and
   receiving a credential for the second network stack to establish the second connection with the external computing system, wherein the credential is included in the provided information.
3. The device of embodiment 2, wherein the authentication exchange includes:
   verifying, via the first network stack, a received server certificate attesting to a public key of the external computing system, wherein establishing the second connection includes the second processor communicating with the external computing system without verifying the server certificate again via the second network stack.
4. The device of embodiment 2, wherein the authentication exchange includes:
   providing, via the first network stack, a client certificate attesting to a public key of the device, wherein establishing the second connection includes the second processor communicating with the external computing system without providing the client certificate again.
5. The device of embodiment 1, wherein establishing the second connection includes:
   deriving, via the second network stack, a cryptographic key from key material included in a credential in the provided information; and
   securing, via the second network stack, the second connection with the external computing system using the derived cryptographic key.
6. The device of embodiment 5, wherein the credential is a transport layer security (TLS) session resumption token including a pre-shared key (PSK).
7. The device of embodiment 1, wherein the second processor is an efficiency processor having a reduced power consumption relative to the first processor.
8. The device of embodiment 2, wherein the operations include:
   the first processor entering a reduced power state in which operation of the first network stack is suspended; and
   the second processor communicating, via the second network stack, with the external computing system while the first processor is in the reduced power state.
9. The device of embodiment 1, wherein the operations include:
   the second processor implementing, via the second network stack, a network proxy for the first processor, wherein implementing the network proxy includes:
   analyzing network traffic routed to the second network stack to determine whether the analyzed network traffic requests a function that is not included in a subset of functions supported by the second network stack; and
   based on the requested function, the second processor providing the analyzed network traffic to the first network stack.
10. The device of embodiment 9, wherein the analyzed network traffic includes a push notification requesting a function of an application executing on the first processor.
11. A method, comprising:
   establishing, by a first processor executing a first network stack of a device, a communication session with a remote computing system via a network interface of the device, wherein the establishing includes receiving a credential for resuming the communication session;
   providing, by the first processor, the credential to a second network stack executing on a second processor of the device; and
   resuming, by the second processor via the second network stack, the communication session with the remote computing system.
12. The method of embodiment 11, wherein the second processor is an efficiency processor having a reduced power consumption relative to the first processor; and
   wherein the second processor is configured to keep alive the communication session while the first processor is in a reduced power state in which operation of the first network stack is suspended.
13. The method of embodiment 11, further comprising:
   prior to the resuming, instructing, by the first processor via the first network stack, the network interface to steer network traffic associated with the resumed communication session to the second network stack.
14. The method of embodiment 11, wherein the establishing includes receiving a plurality of credentials in response to a single authentication handshake; and
   wherein the resuming includes selecting one of the credentials for resuming the communication session.
15. The method of embodiment 11, wherein the credential is a transport layer security (TLS) new session ticket including a pre-shared key (PSK); and
   wherein the resuming includes performing a TLS handshake using the PSK.
16. A non-transitory computer readable medium having program instructions stored therein that are executable by a device to perform operations, comprising:
   establishing a connection with an external computing system via a first network stack executing on a first processor of the device, wherein the establishing includes:
      receiving a credential in response to an authentication handshake; and
   using the credential to keep alive the connection via a second network stack executing on a second processor of the device.
17. The computer readable medium of embodiment 16, wherein keeping the connection alive includes:
   persisting, by the second processor via the second network stack, the connection while the first processor is in a reduced power state in which operation of the first network stack is suspended.
18. The computer readable medium of embodiment 16, wherein keeping the connection alive includes:
   communicating, via the second network stack, with the external computing system at a regular cadence to persist the connection.
19. The computer readable medium of embodiment 18, wherein the external computing system implements a push notification service, and wherein the communicating includes:
   receiving, via the second network stack, one or more push notifications over the persisted connection.
20. The computer readable medium of embodiment 16, wherein keeping the connection alive includes:
   implementing, via the second network stack, a network proxy that receives network traffic destined for the first network stack.

## Claims

1. A device, comprising:
first and second processors;
a network interface; and
memory having program instructions stored therein that are executable by the first and second processors to cause the device to perform operations including:
receiving, at the network interface, network traffic from an external computing system;
the network interface determining, based on a set of routing criteria, whether to route the network traffic to a destination one of a first network stack executing on the first processor or a second network stack executing on the second processor; and
processing the routed network traffic at the destination network stack, wherein the second network stack supports a subset of functions supported by the first network stack.

2. The device of claim 1, wherein the second processor is an efficiency processor having a reduced power consumption relative to the first processor.

3. The device of claim 2, wherein the operations include:
the first processor entering a reduced power state in which operation of the first network stack is suspended; and
the second processor processing, via the second network stack, network traffic routed to the second processor while the first processor is in the reduced power state.

4. The device of claim 1, wherein the operations further include:
the first processor configuring the network interface, wherein the configuring includes the first processor providing routing criteria for routing network traffic for the second processor.

5. The device of claim 4, wherein the provided routing criteria includes a set of network ports or internet protocol (IP) addresses reserved for the second processor by the first processor.

6. The device of claim 1, wherein the operations include:
the first processor negotiating, via the first network stack, one or more parameters associated with a connection of the device via the network interface; and
the first processor providing the one or more parameters to the second processor to facilitate the connection via the second network stack.

7. The device of claim 6, wherein one of the one or more parameters includes a session resumption credential.

8. The device of claim 1, wherein the operations include:
the second processor implementing, via the second network stack, a network proxy for the first processor, wherein implementing the network proxy includes:
analyzing network traffic routed to the second network stack, to determine whether the analyzed network traffic requests a function that is not included in the subset of functions supported by the second network stack; and
based on the requested function, the second processor providing the analyzed network traffic to the first network stack.

9. The device of claim 8, wherein providing the analyzed network traffic includes:
the second processor instructing the first processor to exit a reduced power state in which operation of the first network stack is suspended.

10. The device of claim 8, wherein the analyzed network traffic includes a push notification requesting a function of an application executing on the first processor.

11. A method, comprising:
processing, by a first processor executing a first network stack of a device, network traffic via a network interface of the device;
configuring, by the first processor, the network interface to communicate network traffic for a second processor executing a second network stack of the device, wherein the configuring includes the first processor providing routing criteria for routing network traffic to the second processor; and
processing, by the second processor via the second network stack, network traffic routed to the second processor by the configured network interface.

12. The method of claim 11, wherein the second processor is an efficiency processor having a reduced power consumption relative to the first processor; and
wherein the second processor is configured to keep alive a network connection of the device while the first processor is in a reduced power state in which operation of the first network stack is suspended.

13. The method of claim 11, wherein the routing criteria includes a set of network ports to be reserved for the second processor.

14. The method of claim 11, wherein the configuring includes instructing the network interface to enable a radio access technology (RAT) for use by the second processor.

15. A non-transitory computer readable medium having program instructions stored therein that are executable by a device to perform operations, comprising:
establishing a connection via a first network stack executing on a first processor of the device, wherein the establishing includes:
the first processor negotiating, via the first network stack, one or more parameters associated with the connection of the device; and
providing, by the first processor to a second processor of the device, the one or more parameters to facilitate the connection via a second network stack executing on the second processor.
